(19) **Europäisches Patentamt**

**European Patent Office**

**Office européen des brevets**

(11) Veröffentlichungsnummer: **0 097 345**
**B1**

(12) **EUROPÄISCHE PATENTSCHRIFT**

(45) Veröffentlichungstag der Patentschrift: **26.09.90**

(51) Int. Cl.⁵: **B 01 D 3/28**

(21) Anmeldenummer: **83105950.6**

(22) Anmeldetag: **18.06.83**

(54) Verfahren und Vorrichtung für den Stoff- und/oder Wärmeaustausch und/oder chemische Reaktionen und/oder zum Mischen von gasförmigen und/oder flüssigen Stoffen.

(30) Priorität: **18.06.82 BE 893557**

(43) Veröffentlichungstag der Anmeldung:
**04.01.84 Patentblatt 84/01**

(45) Bekanntmachung des Hinweises auf die
Patenterteilung:
**26.09.90 Patentblatt 90/39**

(84) Benannte Vertragsstaaten:
**AT BE CH DE FR GB IT LI NL**

(56) Entgegenhaltungen:
**CH-A- 493 266**
**DD-A- 136 001**
**DE-A-1 432 012**
**DE-A-1 444 368**
**DE-A-1 904 144**
**DE-A-2 232 785**
**DE-A-2 353 243**
**DE-U-1 781 827**
**FR-A-1 441 973**
**US-A-3 081 072**

(73) Patentinhaber: **Manteufel, Rolf Paul Christian**
**Epiceadreef 11**
**B-2180 Kalmthout-Heide (BE)**

(72) Erfinder: **Manteufel, Rolf Paul Christian**
**Epiceadreef 11**
**B-2180 Kalmthout-Heide (BE)**

(74) Vertreter: **Dr. Fuchs, Dr. Luderschmidt Dipl.-**
**Phys. Seids, Dr. Mehler Patentanwälte**
**Abraham-Lincoln-Strasse 7**
**D-6200 Wiesbaden (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft eine Vorrichtung für die Anordnung in Apparaten für den Stoff- und/oder Wärmeaustausch und/oder chemische Reaktionen und/oder zum Mischen von bzw. zwischen gasförmigen und/oder flüssigen Stoffen nach den Oberbegriffen der Ansprüche 1 und 4.

Beim Stoff- und Wärmeaustausch müssen die im Gleich- oder Gegenstrom geführten Gase und/oder Flüssigkeiten so intensiv wie möglich miteinander in Kontakt gebracht und danach wieder voneinander getrennt werden, um mit einem möglichst minimalen Vorrichtungsvolumen auszukommen. In der Praxis geschieht dies durch spezielle Einbauten, die jedoch die bekannten Bedingungen eines optimalen Stoff- und Wärmeaustausches unterschiedlich erfüllen. Je größer die Stoff- und Wärmeaustauschflächen und die Konzentrations- bzw. Temperaturdifferenzen der im Gleich- oder Gegenstrom geführten Gase und/oder Flüssigkeiten sind, desto wirksamer sind die Einbauten.

Bei industriellen Vorrichtungen mit mehr oder weniger großen Abmessungen ist es schwierig, die Stoffströme im Gleich- oder Gegenstrom so gleichmäßig durch die Einbauten zu führen, daß keine großräumigen Durchmischungen und dadurch zwangsläufig Rückvermischungen auftreten, welche die Konzentrations- und Temperaturdifferenzen und damit die Wirksamkeit der Einbauten verschlechtern.

Aus diesem Grunde wird bei Hochleistungsapparaten mehr und mehr von den bisherigen regellosen Füllkörper-Schüttungen und den im Kreuzstrom betriebenen Bodenkolonnen abgegangen und es werden geordnete Packungen von unterschiedlicher Art eingesetzt, die einen höheren Durchsatz bei einem geringeren Druckverlust garantieren. Je größer bei diesen Packungen die Oberflächen und damit auch die Anzahl der Strömungskanäle sind, desto schwieriger ist die gleichmäßige Verteilung der im Gleich- oder Gegenstrom geführten Medien. Die Freifallgeschwindigkeit von Flüssigkeiten ist nämlich so groß, daß die bei den Stoff- und Wärmeaustauschvorgängen üblichen Flüssigkeitsströme nicht die gesamte Querschnittsfläche des Apparates gleichmäßig beaufschlagen können. Entweder ist nur eine begrenzte Anzahl von Ablaufstellen möglich oder man muß die Flüssigkeiten zerstäuben.

Bei den hierbei auftretenden unterschiedlichen Tropfengrößen und -verteilungen kommt es nicht zu einer gleichmäßigen Berieselung der Querschnittsfläche. Wegen dieser fehlerhaften Flüssigkeitsaufgabe ist es nicht allein ausreichend, die Flüssigkeit auf die Einbauten zu verteilen, sondern die Einbauten selbst müssen durch eine gleichmäßige Benetzung und durch gleiche Druckverluste in jedem einzelnen Strömungskanal für eine Verbesserung der Stoffverteilung im ganzen Austauschraum sorgen.

Es ist bekannt, das Apparatevolumen durch den Einsatz von geordneten Packungen mit parallelen und gewellten Wänden gleichmäßig aufzuteilen und hierfür auch Gewebe verschiedener Arten einzusetzen, um große Oberflächen und gute Benetzungseigenschaften zu erreichen. Bei großen Oberflächen und der dabei großen Anzahl von parallelen Gewebebahnen reicht aber eine gute Benetzung nicht allein aus, um die notwendige Querverteilung der Flüssigkeiten über den ganzen Strömungsquerschnitt zu erzielen. Diese Art von Gewebe Packungen sind deshalb zur Verbesserung der Flüssigkeitsverteilung mit zur Kolonnenachse schräglaufenden Zahnungen oder Wellen versehen, die für eine Querverteilung der Flüssigkeit über den gesamten Strömungsquerschnitt sorgen. Andererseits führt diese Zwangsführung der Flüssigkeit durch die nach außen geneigten Wellen zur unerwünschten Randgängigkeit der durch die Vorrichtung geführten Flüssigkeitsströme, die auch durch zueinander verdreht angeordnete Einzelpackungen nicht ausgeglichen werden kann. So sind auch bei diesen Packungsarten wiederholte Neuaufgaben der Flüssigkeit durch zusätzliche Flüssigkeitsverteiler erforderlich.

Während bei den bekannten Gewebepackungen die Flüssigkeit auf den Gewebeoberflächen verteilt und die Gase an diesen Oberflächen mehr oder weniger mit der Leerrohrgeschwindigkeit vorbeigeführt werden, sind bei Füllkörper-Schüttungen und besonders bei allen Bodenkolonnen durch die Querschnittseinschnürungen die Geschwindigkeiten größer als die Leerrohrgeschwindigkeit. Dies führt bei allen diesen Austauschertypen zu einem erhöhten Druckverlust.

Um diese Nachteile zu vermeiden und um möglichst gleichmäßige Strömungsverhältnisse zu erreichen, müssen die Einbauten gleichgroße Strömungskanäle besitzen. Weiterhin dürfen zur Erzielung eines kleinen Druckverlustes keine Beschleunigungen gegenüber der Leerrohrgeschwindigkeit auftreten, oder mit anderen Worten, es dürfen die Strömungsquerschnitte nicht, wie bei den bekannten Einbauten, verengt sein.

Eine Einbauvorrichtung für die Stoffverteilung, welche eine Mehrzahl von zumindest teilweise durchlässigen, in Hauptströmungsrichtung verlaufenden Wänden aufweist, deren Zwischenräume mittels ebenfalls durchlässigen Querwänden in einer Folge von quer zur Strömungsrichtung verlaufenden Kammern unterteilt sind, ist aus der DE-A-1 904 144 bekannt. Bei dieser bekannten Vorrichtung verläuft ein wesentlicher Anteil zumindest der aufsteigenden Gasströmung durch die Querwände, wobei eine Flechtströmung in die Abstandsbereiche zwischen benachbarten Längswänden nicht erzwungen wird und daher nur in begrenztem Maß erfolgt. Außerdem sind die Strömungsquerschnitte wesentlich kleiner als der Querschnitt der leeren Kolonne in Hauptströmungsrichtung, so daß erhebliche Strömungsbeschleunigungen stattfinden müssen.

Aus der CH-A-493 266 ist eine Einbauvorrichtung aus gewellten, perforierten Wänden bekannt, die mit ihren Wellen unter Winkeln aneinander anliegen, wobei die Wellen spitzwink-

lig zur Hauptströmungsrichtung verlaufen, so daß die zwischen benachbarten Wänden gebildeten Kanäle vom Eintritts-zum Austrittsende der Vorrichtung hin im wesentlichen durchgehend verlaufen und mit den Nachbarkanälen weitgehend unmittelbar in Strömungsverbindung stehen, so daß das strömende Medium die perforierten Wände nicht notwendigerweise durchströmen muß.

Der Erfindung liegt die Aufgabe zugrunde, eine Vorrichtung der eingangs bezeichneten Art zu schaffen, die einen optimalen Stoff- und Wärmeaustausch auf möglichst kleinem Raum und unter Vermeidung von wesentlichen Druckverlusten ermöglicht.

Diese Aufgabe wird erfindungsgemäß durch die Merkmale der kennzeichnenden Teile der Patentansprüche 1 und 4 in zwei unterschiedlichen Ausführungsformen gelöst.

Es wurde gefunden, daß bei in mehreren Schichten parallel zur Längsachse bzw. Hauptströmungsrichtung in der Vorrichtung angeordneten Austauschflächen die Strömungsgeschwindigkeit durch diese Flächen kleiner ist als die Leerrohrgeschwindigkeit der durch die Vorrichtung geführten Medien. Mit der Anzahl der parallel zur Hauptströmungsrichtung angeordneten durchlässigen Flächen verringern sich die Strömungsgeschwindigkeiten durch diese Flächen und damit auch die Druckverluste. Hierdurch ist der Durchsatz bei gleichem Druckverlust größer bzw. die Medien können bei gleichzeitigen Querverteilungen je Stufe mehrstufig durch die nebeneinander angeordneten Austauschflächen hin und her geführt werden, ohne daß es zu unzulässig hohen Druckverlusten kommt. So werden höhere Trennstufen-Zahlen je Längeneinheit der Vorrichtung bei geringen Druckverlusten erzielt.

Bei der erfindungsgemäßen Vorrichtung werden die in Einzelströmen durch die Vorrichtung geführten Medien abwechselnd durch parallel zur Hauptströmung angeordnete durchlässige Wände geführt deren Zwischenräume in Hauptströmungsrichtung in eine Folge von im wesentlichen querverlaufenden Kammern unterteilt ist. Aufgrund der Porosität der Wände sowie deren Unterteilung durchdringen sich die Stoffströme und es kommt zum wiederholten Mengenausgleich zwischen benachbarten Räumen. Durch dieses abwechselnde Durchströmen von benachbarten Räumen findet eine sogenannte Flechtströmung der im Gleich- oder Gegenstrom durch die Vorrichtung geführten Stoffe mit dem gewünschten quervermischenden Effekt statt. Hierdurch wird ein Ausgleich ursprünglich ungleicher Verteilung am Eintrittsquerschnitt der Vorrichtung und damit ein optimaler Stoff- und/oder Wärmeaustausch erzwungen.

Darüber hinaus ist es besonders vorteilhaft, in sich nichtsteife Gewebe zu verwenden, die durch die auftretenden Druckschwankungen der Gas- und/oder Flüssigkeitsströme bewegt und in Schwingungen versetzt werden, wodurch eine Verbesserung des Stoff- und/oder Wärmeaustausches ohne zusätzlichen apparativen und energetischen Aufwand erreicht werden kann.

Die im wesentlichen in Hauptströmungsrichtung verlaufenden, porösen oder durchlässigen Wände brauchen dabei keinesfalls in sich eben ausgebildet sein. Sie können beispielsweise quer zur Hauptströmungsrichtung gebildete Auswölbungen aufweisen, die dann gleichzeitig die Funktion von gesonderten Abstandsmitteln übernehmen, wie sie im Fall von ebenen, parallelen Wänden erforderlich sind. Die Auswölbungen sind wechselweise nach entgegengesetzten Seiten einer Wand ausgebildet, wobei sich die Auswölbungen benachbarter Wände jeweils berühren. Eine solche Anordnung ergibt sich beispielsweise auch, wenn die einzelnen Wände in Hauptströmungsrichtung einen zickzackförmigen Verlauf aufweisen und sich jeweils an ihren äußersten Punkten berühren, so daß sich insgesamt im Querschnitt eine Art Wabenstruktur ergibt. Ähnlich wirkende Abwandlungen sind dabei natürlich möglich.

Bei in Hauptströmungsrichtung geradlinigen Wänden können die Abstandsmittel als sich quer zur Hauptströmungsrichtung erstreckende Abstandsstreifen ausgebildet sein, die jeweils zwischen zwei benachbarten durchlässigen Wänden verlaufen, welche in diesem Fall im wesentlichen parallel zueinander angeordnet sein können. Diese Abstandsstreifen können entweder aus einem für die strömenden Stoffe undurchlässigen Material bestehen, sie haben aber zumindest eine geringere Durchlässigkeit als das Wandmaterial.

Die durchlässigen Wände können entweder aus im wesentlichen ebenen Flächen bestehen, zweckmäßiger kann es auch sein, sie konzentrisch zur Hauptströmungsrichtung anzuordnen.

Bei einer bevorzugten Ausführungsform bestehen die Wände und eventuell auch die Abstandsmittel, insofern sie von den Wänden getrennte Bauteile darstellen, aus einem flexiblen durchlässigen Material, das wiederum bevorzugt ein Gewebe ist. Solche flexiblen Wände werden mit ihren Enden an entsprechenden Rahmen befestigt und können in Hauptströmungsrichtung des Apparates, insoweit erforderlich, durch Bewegung dieser Rahmen in entgegengesetzter Richtung gespannt werden.

Während bei nicht flexiblen Wänden benachbarte Wände über die Abstandsmittel nicht unbedingt miteinander verbunden sein müssen, da der Abstand durch das Anlegen benachbarter Wände an die Abstandsmittel gehalten werden kann, ist es bei der Ausbildung der Wände im allgemeinen geboten, benachbarte Wände über flexible Abstandsmittel miteinander zu verbinden, da sich bei einem Spannen flexibler Wände der gegenseitige Abstand am besten durch eine gewisse Zugbeanspruchung an den Abstandsmitteln gehalten werden kann. Dies trifft auch für eine zickzackförmige Anordnung der Wände zu. Hierfür brauchen benachbarte flexible Wände lediglich im Abstand miteinander verbunden zu werden, so daß sich durch zusätzliches Querverspannen im aufgerichteten Zustand der Vorrichtung die erwünschte Wabenstruktur ergibt.

Durchlässige Wände gewisser Flexibilität bieten einbaumäßig auch noch den Vorteil, daß sie unter Einfügung geeigneter Abstandsmittel spiralig zur Ausbildung der Vorrichtung aufgewickelt werden können. Hierdurch erhält man eine nahezu konzentrische Anordnung der Wände. Besonders vorteilhaft kann es sein, für das Erzeugen einer so spiralig aufgewickelten Vorrichtung eine doppellagige Bahn aus dem durchlässigen Wandmaterial zu verwenden, die zwischen den beiden Lagen bereits mit Abstandsmitteln versehen ist und zusätzlich an einer Außenseite parallel versetzt zu diesen Abstandsmitteln weitere Abstandsmittel aufweist. Eine solche aufwickelbare Doppelbahn kann auch aus zwei aneinander befestigten Bahnen mit dem oben erwähnten Zickzackquerschnitt bestehen.

Bei Wandmaterialien bzw. Geweben mit durchgehend gleicher Porosität oder Maschenweite werden optimale Stoff- und/oder Wärmeaustauschverhältnisse jedoch noch nicht erreicht. Deshalb ist bei einer weiteren bevorzugten Ausführungsform erfindungsgemäß vorgesehen, daß das durchlässige Wandmaterial Bereiche unterschiedlicher Durchlässigkeit aufweist. Mit durchlässigem Material durchgehend gleicher Porosität oder Maschenweite sind nämlich eine gute Querverteilung der Stoffströme, vollständige Benetzung der Gewebeoberflächen und geringe Druckverluste der kontinuierlichen Phase nicht gleichzeitig optimal zu erreichen. So haben engmaschige Gewebe bessere Benetzungseigenschaften und damit bessere Querverteilungen und Trennwirkungen als weitmaschige Gewebe, andererseits haben sie verhältnismäßig hohe Druckverluste. Weitmaschige Gewebe mit geringeren Druckverlusten haben dagegen allgemein schlechtere Benetzungseigenschaften und dadurch auch schlechtere Querverteilungen und Trennwirkungen. Die gegensätzlichen Forderungen sind mit den bekannten Gewebearten deshalb nicht ohne weiteres zu erfüllen.

Um diese Forderungen weitgehend zu erfüllen, werden erfindungsgemäß Bereiche geringerer Wanddurchlässigkeit unmittelbar im Bereich der Abstandsmittel bzw. der Berührungsstellen zwischen den Auswölbungen vorgesehen. Sind die Abstandsmittel selbst aus durchlässigem Material, so müssen sie ebenfalls diese geringere Durchlässigkeit aufweisen. Eine solche Anordnung hat den Vorteil, daß dadurch die flüssigen Medien stufenweise so angestaut werden, daß wiederholte horizontale Querverteilungen der Flüssigkeiten und gleichzeitig eine Durchströmung der Wände bei kleinen Druckverlusten stattfindet.

Hierdurch erfolgt stufenweise eine Neuverteilung der Flüssigkeit sowohl in der einen als auch der anderen Querschnittsachse und wird bei einem rotationssymmetrischen Aufbau der Vorrichtungsfüllung regelmäßig wiederholt. Ungleichmäßige Flüssigkeitsaufgaben gleichen sich zum einen innerhalb der angestauten Flüssigkeitsschichten selbst und zum anderen durch einen größeren Flüssigkeitsablauf aus höher angestauten Flüssigkeitsschichten der nebeneinander liegenden Strömungskanäle aus. Durch die Vielzahl gleichgroßer Strömungsquerschnitte und die über- und nebeneinander angeordneten Stufen kommt es zu einer Vergleichmäßigung der Strömungsverhältnisse über den ganzen Querschnitt der Vorrichtung. Dies gilt auch für die durch die Vorrichtung und durch die durchlässigen Wände strömende Gasphase, da bei unterschiedlichen Strömungsmengen unterschiedliche Druckverluste und damit verbunden unterschiedliche Drücke in den nebeneinander angeordneten Strömungskanälen auftreten müßten, was jedoch durch die untereinander verbundenen durchlässigen Räume nicht möglich ist. Durch die Art und Anordnung der erfindungsgemäßen Einbauten in einem Apparat wirkt dies strömungsmäßig selbstregulierend und ausgleichend, so daß über größere Bereiche keine unterschiedlichen Strömungsverhältnisse der Flüssigkeiten und Gase in dem Apparat auftreten können.

Die mehrschichtig nebeneinander angeordneten durchlässigen Gewebe oder technischen Textilien können auch zu einer Füllung zusammengefaßt sein und durch einen mechanischen Antrieb in der Vorrichtung hin und her bewegt werden, so daß eine zusätzliche Axialströmung erzeugt wird und eine Quervermischung auftritt, was beispielsweise bei höher viskosen Stoffen besonders vorteilhaft ist.

Zur Durchführung chemischer Reaktionen können die durchlässigen Wände aus katalytischem Material bestehen oder einen katalytisch wirkenden Überzug haben.

Bei dem bevorzugten Einsatz von Geweben für die erfindungsgemäße Vorrichtung lassen sich die Bereiche unterschiedlicher Durchlässigkeit der Wände bzw. der Abstandsmittel durch eine in Abständen wechselnde Gewebestruktur, d.h. durch eine in Abständen wechselnde Maschenweite erreichen. Eine andere zweckmäßige Methode besteht darin, zum Erzeugen von Bereichen geringerer Durchlässigkeit Abschnitte oder Streifen eines dichteren Gewebes, d.h. eines Gewebes mit engeren Maschen, auf ein gröbermaschiges Grundgewebe aufzubringen.

Die Auswahl der Gewebeart hängt im wesentlichen vom Einsatzzweck, d.h. von den Stoffen ab, mit denen das Gewebe in dem Stoffaustauschapparat in Berührung kommt. So sind je nach Anwendungsfall beispielsweise Gewebe aus Kunststoff- oder Glasfäden, Gewebe aus Baumwolle, aber auch Gewebe aus Metall geeignet.

Bevorzugte Maschenweiten für die Gewebebereiche höherer Durchlässigkeit liegen zwischen etwa 1 und 5 mm, während die Maschenweiten für die Gewebebereiche geringerer Durchlässigkeit von einem dichtgewebten Gewebe bis zu einer lichten Maschenweite von etwa 2 mm reichen.

Die Abstände zwischen den durchlässigen Wänden werden bevorzugt zwischen 3 und 25 mm gewählt während die senkrechten Abstände zwischen zwei entgegengesetzt gerichteten Abstandsmitteln bzw. Auswölbungen an einer Wand bevorzugt zwischen 20 und 100 mm betragen.

Es wurde bereits erwähnt, daß die flexible Ausbildung der durchlässigen Wände, bevorzugt in Form eines Gewebes, den besonderen Vorteil bietet, daß dieses Gewebe selbst bei einer für den Einbau erforderlichen Spannung durch praktisch immer auftretende Druckschwankungen in Bewegung bzw. in Schwingungen gerät, die die Wirkung der erfindungsgemäßen Vorrichtung noch verbessern.

Im folgenden wird die Erfindung anhand der beigefügten Figuren der Zeichnung im einzelnen noch näher erläutert. Darin stellen dar:

Fig. 1 eine schematische Darstellung einer Vorrichtung gemäß der Erfindung, bestehend aus einem Paket senkrechter, durchlässiger Wände, die durch horizontal verlaufende, ebenfalls durchlässige Abstandsbänder wechselweise miteinander verbunden sind;

Fig. 2 eine Ausschnittdarstellung des Bereiches II in Fig. 1;

Fig. 3 verschiedene Ausführungsformen der Anordnung bis 7 der Abstandsbänder in Verbindung mit Wandbereichen geringerer Durchlässigkeit;

Fig. 8 eine andere Ausführungsform der erfindungsgemäßen Vorrichtung, bei der die durchlässigen Wände in senkrechter Richtung einen zickzackförmigen Verlauf aufweisen und durch Verbindung miteinander an den jeweils aneinandergrenzenden erhabenen Stellen in bestimmtem Abstand gehalten sind;

Fig. 9 eine im wesentlichen der Ausführung nach Fig. 1 entsprechende Ausführung der erfindungsgemäßen Vorrichtung, jedoch in im wesentlichen konzentrischer Anordnung, die durch spiraliges Wickeln einer doppellagigen Bahn des durchlässigen Wandmaterials mit entsprechenden Abstandsbändern entstanden ist; und

Fig. 10 eine im wesentlichen der Ausführungsform nach Fig. 8 entsprechende Ausführungsform der erfindungsgemäßen Vorrichtung, bei der eine doppellagige Bahn des durchlässigen Wandmaterials spiralig aufgewickelt ist, wobei die Abstände zwischen den Wänden durch den zickzackförmigen Verlauf des Bahnmaterials sich von selbst ergeben.

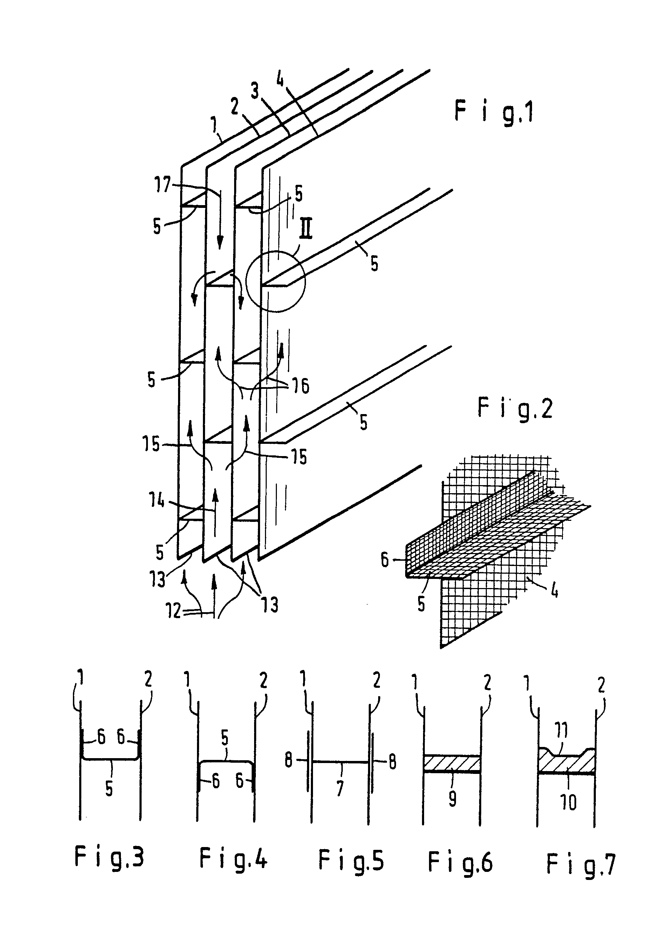

In Fig. 1 ist in schematischer perspektivischer Darstellung ein Ausschnitt aus einer erfindungsgemäßen Vorrichtung dargestellt, wie sie als Einbau in einen Apparat für den Stoff- und/oder Wärmeaustausch vorgesehen ist. Dargestellt sind als Teil der Vorrichtung eine Anzahl von senkrecht angeordneten, durchlässigen Wänden 1, 2, 3 und 4, die durch Abstandsbänder 5 in bestimmtem Abstand voneinander gehalten sind.

Es ist für den Fachmann auf diesem Gebiet verständlich, daß eine Anordnung der dargestellten Art paketweise in einen Behälter für einen Apparat zum Stoff- oder Wärmeaustausch eingebaut wird, um im wesentlichen dessen gesamten Querschnitt auszufüllen.

Apparate dieser Art sind in der chemischen Industrie geläufig und werden beispielsweise für chemische Reaktionen, zur Destillation von Gemischen, zur Extraktion und für entsprechende Grundoperationen der chemischen Verfahrenstechnik eingesetzt. Die der gewünschten Behandlung auszusetzenden Stoffe werden im allgemeinen am oberen und/oder unteren Ende in den Apparat eingeleitet, durch den sie dann in im wesentlichen senkrechter Hauptströmungsrichtung im Gleichstrom oder im Gegenstrom durch den Innenraum des Behälters geführt werden, der beispielsweise durch einen Einbau entsprechend der erfindungsgemäßen Vorrichtung ausgefüllt ist. Im allgemeinen sind an den Aufgabeenden des Behälters noch dem Fachmann bekannte Verteilvorrichtungen für die eingeleiteten Stoffe vorgesehen, welche gewährleisten sollen, daß diese möglichst schon von vornherein gleichmäßig über den gesamten Querschnitt des Behälters verteilt werden.

Es ist für den Fachmann selbstverständlich, daß die beispielsweise in Fig. 1 dem Prinzip nach dargestellte erfindungsgemäße Vorrichtung nicht nur aus der dort gezeigten Anzahl von durchlässigen Wänden und Abstandsstreifen bestehen muß, sondern daß die Anzahl der Elemente derart gewählt wird, daß sie den Querschnitt des Apparates, in den sie eingebaut werden, im wesentlichen vollständig ausfüllen. Je nach Form oder Ausbildung des Behälters können die paketartigen Einbauten entweder konzentrisch angeordnete durchlässige Wände oder aber auch plattenförmig parallel angeordnete Wände aufweisen. Es ist für den Fachmann ferner einleuchtend, daß je nach dem Material, aus dem die durchlässigen Wände und Abstandsmittel bestehen, oben und unten im Behälter entsprechende Rahmen oder Halterungen vorzusehen sind, an denen die Wände mit ihren Endkanten befestigt sind. Dies ist insbesondere dann erfordereich, wenn es sich bei den durchlässigen Wänden um solche aus flexiblem Material handelt, die beidseitig befestigt und eingespannt sein müssen, um ihre entsprechende Lage im Behälter beizubehalten.

Die im Ausführungsbeispiel der Fig. 1 dargestellten durchlässigen Wände 1, 2, 3 und 4 bestehen beispielsweise aus einem Gewebe aus Kunststoffasern oder -drähten mit einer Maschenweite zwischen 1 und 5 mm. Auch die Abstandsbänder 5 können aus einem Gewebe bestehen, das beispielsweise mit den Geweben der Wände 1, 2, 3, 4 verklebt oder anderweitig verbunden ist. In Fig. 2 ist ausschnittsweise eine Verbindungsstelle zwischen einem Abstandsband 5 und der Wand 4 dargestellt. Wie aus dieser Zeichnung zu erkennen ist, ist das Abstandsband 5 entlang seiner Berührungskante mit der durchlässigen Wand 4 nach oben abgewinkelt und bildet einen Kragen 6, der mit der durchlässigen Wand 4 auf eine geeignete Art und Weise, beispielsweise durch Verschweißen oder Verkleben, verbunden ist. Eine entsprechende Verbindung kann mit der sich an die andere Kante des Abstandsbandes 5 anschließenden durchlässigen Wand bestehen.

Bei einer bevorzugten Ausführungsform der Erfindung weisen die durchlässigen Wände Bereiche unterschiedlicher Durchlässigkeit auf. Dementsprechend hat, wie aus Fig. 2 hervorgeht, das Abstandsband 5 bei dieser Ausführung, und mit ihm auch der Kragen 6, eine geringere Maschenweite als das Grundgewebe der durchlässigen Wand 4. Der auf das grobmaschige Grundgewebe der durchlässigen Wand 4 aufgebrachte Kragen 6 bildet damit einen solchen Bereich geringerer Durchlässigkeit der durchlässigen Wand 4. Das Abstandsband 5 mit dem Kragen 6 kann beispielsweise aus einem dichtgefertigten Gewebe mit im wesentlichen aneinanderliegenden Kett- und Schußfäden bestehen, es kann aber auch lichte Maschenweiten bis zu etwa 2 mm aufweisen. Wie im folgenden noch näher erläutert wird, werden die Bereiche geringerer Durchlässigkeit der Wände 1, 2, 3, 4 vorzugsweise im Bereich der Abstandsbänder 5 vorgesehen.

In den Fig. 3—7 sind im schematischen Schnitt jeweils zwei durchlässige Wände 1 und 2 mit einem dazwischen angeordneten Abstandsband in unterschiedlicher Ausführungsform dargestellt. Die Ausführungsform der Fig. 3 entspricht im wesentlichen der Darstellung gemäß Fig. 4, wobei jedoch die nach oben gerichteten Kragen 6 zu beiden Seiten des Abstandsbandes 5 erkennbar sind. Bei der Ausführungsform gemäß Fig. 4 ist das Abstandsband 5 praktisch umgedreht worden, indem sich seine seitlichen Kragen 6 nicht nach oben, sondern nach unten erstrecken.

In Fig. 5 ist eine Ausführung dargestellt, bei der ein Abstandsband 7 mit an den Außen- oder Innenseiten der angrenzenden Wände 1 und 2 aufgebrachten Gewebestreifen 8 verbunden ist, die wie die Kragen 6 bei den vorhergehenden Ausführungsformen gegenüber dem grobmaschigen Grundgewebe der Wände 1 und 2 aus einem engermaschigen Gewebe bestehen. Die Ausführungsform nach Fig. 5 stellt praktisch eine Kombination der Ausführungsformen nach den Fig. 3 und 4 dar, indem sich die Bereiche geringerer Durchlässigkeit der Wände sowohl nach oben als auch nach unten von dem Abstandsband 7 erstrecken. Die Auswahl der unterschiedlichen Ausführungen hängt von dem Anwendungsfall ab, für den die entsprechende Vorrichtung verwendet werden soll.

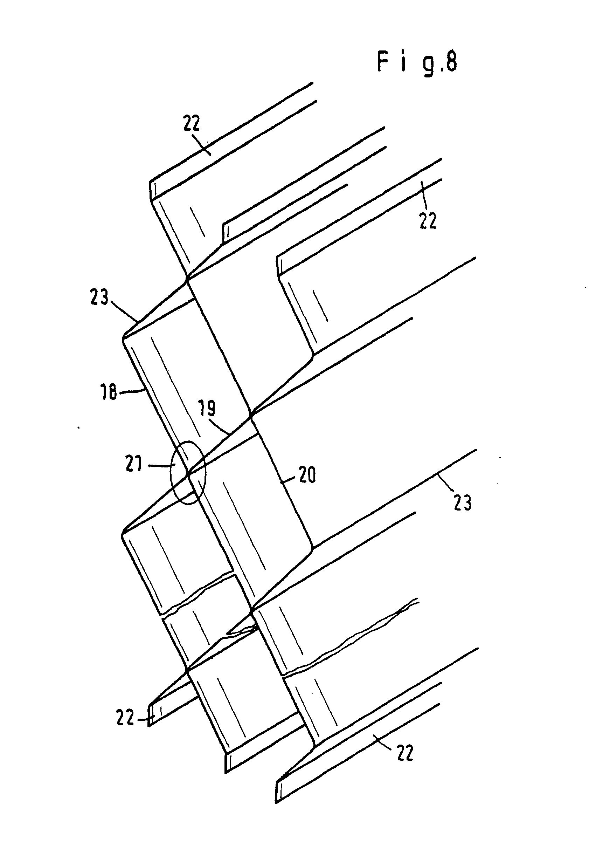

In den Fig. 6 und 7 sind noch zwei Ausführungsformen gezeigt, bei denen das Abstandsband nicht aus einem Gewebe, sondern aus einem massiven, undurchlässigen Materialstreifen 9 bzw. 10 besteht. Bereiche geringerer Durchlässigkeit der Wände 1 und 2 können auch bei diesen Ausführungsformen nach Bedarf vorgesehen sein. Das Abstandsband 10 in Fig. 7 weist an seiner Oberseite eine rinnenförmige Vertiefung 11 auf. Eine solche Vertiefung kann zweckmäßig sein, wenn beispielsweise ein erhöhter Flüssigkeitsstau beim Durchströmen durch die Vorrichtung erwünscht ist.

Es sei jetzt nochmals auf Fig. 1 Bezug genommen, um anhand der dort beispielhaft eingetragenen Strömungspfeile den möglichen Strömungsverlauf durch die Vorrichtung zu erläutern.

Es sei angenommen, daß von unten ein Gasstrom 12 in die Vorrichtung geleitet wird, der sich mehr oder weniger gut gleichmäßig auf die einzelnen Strömungskanäle 13 der Vorrichtung verteilt. Da die Abstandsbänder geringerer Durchlässigkeit, die beispielsweise noch durch Wandbereiche geringerer Durchlässigkeit vergrößert sein können, wie dies in Fig. 5 dargestellt ist, einen teilweise erhöhten Strömungswiderstand für das aufsteigende Gas darstellen, teilt sich beispielsweise der mittlere Teilstrom 14 in zwei seitliche Teilströme 15 auf, die durch die durchlässigen Wände 2 und 3 hindurchtreten und sich in den Nachbarströmungskanälen fortsetzen. Entsprechendes Verhalten ist für die Teilströme 16 dargestellt. Da dieses Verhalten für jeden Punkt der Vorrichtung gilt, tritt insgesamt eine Quervermischung und Vergleichmäßigung der gesamten Strömung durch die Vorrichtung ein. Hierfür ist es wichtig, daß die Abstandsmittel bzw. die Abstandsbänder 5 jeweils versetzt zueinander in benachbarten Strömungskanälen angeordnet sind. Entsprechend ist im Ausführungsbeispiel der Fig. 1 ein von oben kommender Flüssigkeitsteilstrom 17 dargestellt, für den die Abstandsbänder 5 einerseits einen gewissen Strömungsstau bilden, der ebenfalls bewirkt, daß sich die Flüssigkeit in die jeweiligen Nachbarkanäle verteilt, und andererseits zusammen mit eventuellen Wandbereichen höherer Maschendichte einen Bereich darstellen, der eine erhöhte Wandbenetzung mit Flüssigkeit darstellt. Im übrigen ist die Wirkung der Vorrichtung in der Beschreibungseinleitung ausführlich erläutert.

Fig. 8 zeigt eine andere bevorzugte Ausführungsform der erfindungsgemäßen Vorrichtung, bei der die durchlässigen Wände 18, 19 und 20 in senkrechter Richtung einen zickzackförmigen Verlauf zeigen. An ihren Berührungsstellen, von denen eine durch den Kreis 21 besonders hervorgehoben ist, sind die durchlässigen Wände miteinander verbunden. Besondere Abstandsmittel entfallen hier, da bei dieser Ausführung die ausgebuchteten Ecken der Wände 18, 19, 20 selbst als Abstandshalter dienen. Da hier keine besonderen Abstandsteile vorhanden sind, die bereits mit einer anderen Durchlässigkeit ausgeführt werden könnten, müssen hier erforderlichenfalls die durchlässigen Wände selbst in den Verbindungsbereichen 21 mit anderer Durchlässigkeit ausgeführt werden. An den oberen und unteren Enden der Wände 18, 19, 20 sind leistenartige Kanten 22 dargestellt, an denen die Wände gehaltert bzw. in einen entsprechenden Rahmen eingespannt werden können.

Als Material für die Wände kann hier ein Gewebe- oder Gittermaterial vorgesehen werden, welches einerseits eine genügende Eigensteifigkeit besitzt, um von alleine die dargestellte Gestalt beizubehalten, andererseits aber noch so elastisch ist, daß es durch die durchtretende Strömung ebenfalls noch in gewisse Schwingungen versetzt wird. Wird eine solche Ausführungsform dagegen aus weichem Gewebe hergestellt, ist ein zusätzliches Verspannen an den Außenkanten 23 der äußersten Wände erforderlich, um das System in dem wabenförmigen Zustand zu halten.

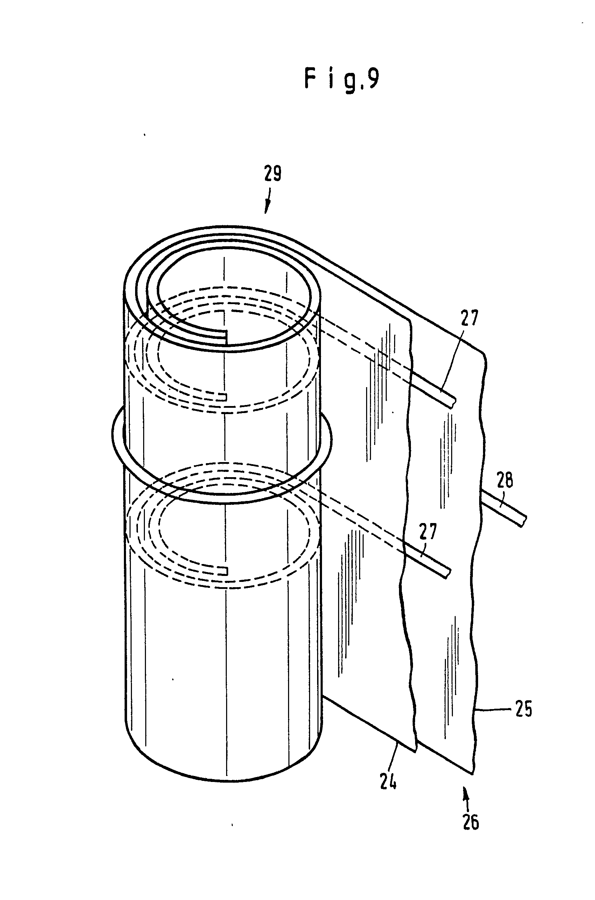

Eine technisch andere Ausführungsform der erfindungsgemäßen Vorrichtung, die auf einfache Weise eine im wesentlichen konzentrische Anordnung der durchlässigen Wände ermöglicht, ist schematisch in Fig. 9 dargestellt. Die dortige Vorrichtung ist aus einer doppellagigen Bahn 26 gewickelt, die aus zwei durchlässigen Einzelwänden 24 und 25 besteht, welche durch Abstandsbänder 27 miteinander verbunden sind. Außerdem sind auf der Außenseite der Bahn 25 noch Abstandsbänder 28 vorgesehen, die versetzt zu den Abstandsbändern 27 angeordnet sind. Die Herstellung der Vorrichtung aus einer doppellagigen Bahn aus durchlässigen Einzelwänden ist erforderlich, weil bei einer einzelnen Lage mit Abstandsbändern die Abstandsbänder immer auf die gleiche Höhenlage zu liegen kämen und die gegenseitig versetzte Anordnung, die für die Funktionsweise wesentlich ist, ausschließen würde.

Für den Fall, daß die durchlässigen Wände 24 und 25 des Wickelkörpers 29 aus einem lappigen Material bestehen, müssen die einzelnen Lagen des gewickelten Körpers natürlich auch an ihren Enden entsprechend eingespannt werden.

Für die gezeigte Ausführungsform wird jedoch ein in sich ausreichend steifes Wandmaterial, beispielsweise in Form eines Metallgewebes bevorzugt. Die Abstandsbänder 27 sind dabei zweckmäßigerweise aus genügend steifem, aber für das Wickeln noch ausreichend elastischem Material hergestellt, das bei dieser Ausführungsform nicht unbedingt durchlässig zu sein braucht.

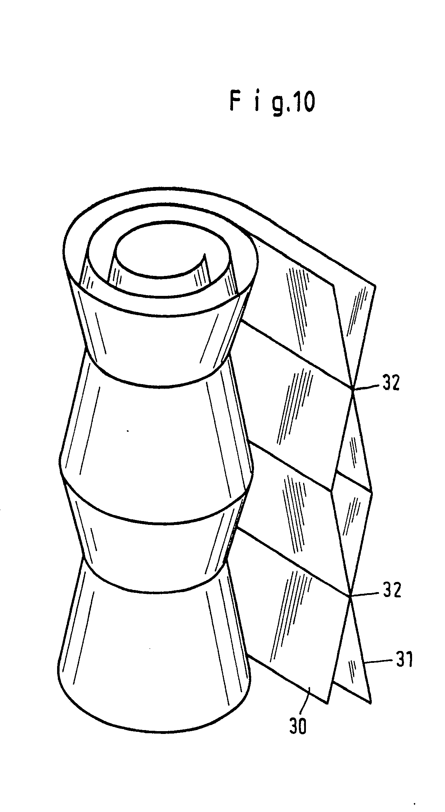

Die Fig. 10 zeigt schematisch eine entsprechende Wickelanordnung für eine doppellagige Bahn mit Zickzackverlauf, ähnlich der Ausführungsform nach Fig. 8. Auch hier ist es erforderlich, die aufzuwickelnde Bahn doppellagig mit entgegengesetztem Zickzackverlauf der einzelnen Lagen auszuführen, da ansonsten die Kammern zwischen den durchlässigen Wänden 30 und 31 nicht entstehen würden. Die Bahnen 30 und 31 sind dabei an ihren Berührungsstellen 32 miteinander verbunden. Das Wandmaterial sollte genügend Eigensteifigkeit aufweisen, um dem gesamten Wickelkörper ausreichende Stabilität zu verleihen, soll aber auch ausreichend verformbar sein, um trotz der speziellen Formgebung das Aufwickeln zu ermöglichen. Metallgewebe sind beispielsweise hierfür geeignet.

**Patentansprüche**

1. Vorrichtung für die Anordnung in Apparaten für den Stoff- und/oder Wärmeaustausch und/oder chemische Reaktionen und/oder zurn Mischen von bzw. zwischen gasförmigen und/oder flüssigen Stoffen, mit zumindest teilweise durchlässigen Wänden (1, 2, 3, 4), die im wesentlichen in der Hauptströmungsrichtung der Stoffe durch den Apparat verlaufen, wobei zwischen jeweils zwei benachbarten Wänden (2, 3) quer zur Hauptströmungsrichtung durchgehende Kammern gebildet sind, die untereinander in Strömungsverbindung stehen, dadurch gekennzeichnet, daß die Kammern in Hauptströmungsrichtung durch Abstandsmittel (5, 6, 7, 9, 10) begrenzt sind, welche eine geringere Durchlässigkeit aufweisen als die zwischen zwei Abstandsmitteln (5, 6, 7, 9, 10) befindlichen Bereiche der Wände (1, 2, 3, 4), und daß die Abstandsmittel (5, 6, 7, 9, 10) wechselständig an entgegengesetzten Seiten der Wände (1, 2, 3, 4) angeordnet sind, so daß jede von zwei benachbarten Wänden (2, 3) begrenzte, quer zur Hauptströmungsrichtung verlaufende Kammer mit Ausnahme der Außen- und Endkammern an jeweils zwei in Hauptströmungsrichtung aufeinanderfolgende Kammern jenseits einer sie begrenzenden Wand (2, 3) angrenzt.

2. Vorrichtung nach Anspruch 1, dadurch gekennzeichnet, daß die Wände (1, 2, 3, 4) mittels der Abstandsmittel (5, 6, 7, 9, 10) jeweils miteinander verbunden sind.

3. Vorrichtung nach Anspruch 1 oder 2, dadurch gekennzeichnet, daß die Abstandsmittel aus im wesentlichen senkrecht zu den Wänden (1, 2, 3, 4) angeordneten Abstandsbändern (5) bestehen.

4. Vorrichtung für die Anordnung in Apparaten für den Stoff- und/oder Wärmeaustausch und/oder chemische Reaktionen und/oder zurn Mischen von bzw. zwischen gasförmigen und/oder flüssigen Stoffen, mit zumindest teilweise durchlässigen Wänden (18, 19, 20), die im wesentlichen in der Hauptströmungsrichtung der Stoffe durch den Apparat verlaufen, wobei zwischen jeweils zwei benachbarten Wänden (19, 20) quer zur Hauptströmungsrichtung durchgehende Kammern gebildet sind, die untereinander in Strömungsverbindung stehen, dadurch gekennzeichnet, daß die Kammern in Hauptströmungsrichtung durch in gegenseitiger Berührung befindliche Auswölbungen (21) zweier benachbarter Wände (18, 19) begrenzt sind, und daß die Auswölbungen (21) wechselweise zu entgegengesetzten Seiten der Wände (18, 19, 20) hin ausgebildet sind, so daß jede von zwei benachbarten Wänden (19, 20) begrenzte, quer zur Hauptströmungsrichtung verlaufende Kammer mit Ausnahme der Außen- und Endkammern an jeweils zwei in Hauptströmungsrichtung aufeinanderfolgende Kammern jenseits einer sie begrenzenden Wand (19, 20) angrenzt.

5. Vorrichtung nach Anspruch 4, dadurch gekennzeichnet, daß die Wände (18, 19, 20) entlang ihrer Berührungsstellen (21) miteinander verbunden sind.

6. Vorrichtung nach einem der Ansprüche 1—5, dadurch gekennzeichnet, daß die Wände (1, 2, 3, 4) Bereiche unterschiedlicher Durchlässigkeit aufweisen.

7. Vorrichtung nach Anspruch 6, dadurch gekennzeichnet, daß angrenzend an die Abstandsmittel (5) bzw. die Berührungsstellen (21) der Auswölbungen Wandbereiche (6, 8) mit geringerer Durchlässigkeit vorgesehen sind und/ oder daß die Abstandsmittel (5) selbst Bereiche geringerer Durchlässigkeit bilden.

8. Vorrichtung nach einem der Ansprüche 1—7, dadurch gekennzeichnet, daß die Wände (1, 2, 3, 4; 18, 19, 20) aus einem flexiblen Material bestehen und an ihren Enden gehaltert und erforderlichenfalls gespannt sind.

9. Vorrichtung nach Anspruch 8, dadurch gekennzeichnet, daß die obere und/oder untere Halterung der Wände jeweils eine in sich geschlossene Einheit bildet, die für eine mechanische Hin- und Herbewegung innerhalb des Aggregates antreibbar ist.

10. Vorrichtung nach Anspruch 9, dadurch gekennzeichnet daß die obere und untere Halterung der Wände zu einer zusammenhängenden Einheit miteinander verbunden sind, die insgesamt für eine mechanische Hin- und Herbewegung innerhalb des Aggregates antreibbar ist.

11. Vorrichtung nach Anspruch 9 oder 10, dadurch gekennzeichnet, daß die Wände (1, 2, 3, 4) aus einem Textilgewebe bestehen.

12. Vorrichtung nach Anspruch 11, dadurch gekennzeichnet, daß die Bereiche geringerer Durchlässigkeit aus engmaschigen Gewebeabschnitten (6, 8) bestehen, die auf das gröbermaschige Gewebematerial der Wände (1, 2, 3, 4) aufgelegt sind.

13. Vorrichtung nach einem der Ansprüche 3—12, dadurch gekennzeichnet, daß die durchlässigen Wände aus katalytischem Material bestehen oder mit einem katalytisch wirkenden Überzug versehen sind.

14. Vorrichtung nach einem der Ansprüche 3—13, dadurch gekennzeichnet, daß Bahnen (24, 25; 30, 31) aus diesen durchlässigen Wänden spiralig aufgewickelt sind.

15. Vorrichtung nach einem der Ansprüche 1—14, dadurch gekennzeichnet, daß die Abstände zischen den durchlässigen Wanden (2, 3) zwischen 3 und 25 mm und die senkrechten Abstande zwischen zwei entgegengesetzt gerichteten Abständsmitteln (5) an einer Wand zwischen 20 und 100 mm betragen.

**Revendications**

1. Dispositif destiné à être implanté dans des appareils d'échange de matières et/ou de chaleur et/ou de réactions chimiques et/ou de mélange de matières gazéiformes et/ou liquides, avec au moins des parois partiellement perméables (1, 2, 3, 4) qui s'étendent à travers l'appareil sensiblement dans le sens d'écoulement principal des matières, des chambres traversantes étant formées entre respectivement deux parois avoisinantes (2, 3) transversalement au sens d'écoulement principal, chambres qui sont en communication d'écoulement entre elles, caractérisé en ce que les chambres dans le sens d'écoulement principal sont délimitées par des moyens d'écartement (5, 6, 7, 9, 10) qui présentent une plus faible perméabilité que les zones de parois (1, 2, 3, 4) se situant entre deux moyens d'écartement (5, 6, 7, 9, 10), et en ce que les moyens d'écartement (5, 6, 7, 9, 10) sont agencés alternativement sur les côtés opposés des parois (1, 2, 3, 4), de sorte que chacune des chambres délimitées par deux parois avoisinantes (2, 3), transversalement au sens d'écoulement principal, à l'exception des chambres extérieures et d'extrémité, sont contiguës respectivement à deux chambres successives dans le sens d'écoulement principal au-delà d'une paroi (2, 3) les délimitant.

2. Dispositif selon la revendication 1, caractérisé en ce que les parois (1, 2, 3, 4) sont reliées respectivement entre elles par les moyens d'écartement (5, 6, 7, 9, 10).

3. Dispositif selon la revendication 1 ou 2, caractérisé en ce que les moyens d'écartement consistent en des bandes d'écartement (5) agencées sensiblement de façon perpendiculaire aux parois (1, 2, 3, 4).

4. Dispositif destiné à être implanté dans des appareils d'échange de matières et/ou de chaleur et/ou de réactions chimiques et/ou de mélange de matières gazéiformes et/ou liquides, avec au moins des parois partiellement perméables (18, 19, 20), qui s'étendent à travers l'appareil sensiblement dans le sens d'écoulement principal des matières, des chambres traversantes étant formées entre respectivement deux parois avoisinantes (19, 20) transversalement au sens d'écoulement principal, chambres qui sont en communication d'écoulement entre elles, caractérisé en ce que les chambres dans le sens d'écoulement principal sont délimitées par les voussures (21) de deux parois avoisinantes (18, 19) se trouvant en contact réciproque, et en ce que les voussures (21) sont formées alternativement sur les côtés opposés des parois (18, 19, 20), de sorte que chaque chambre délimitée par deux parois avoisinantes (19, 20), s'étendant transversalement au sens principal d'écoulement, à l'exception des chambres extérieures et d'extrémité, est contiguë à respectivement deux chambres successives dans le sens d'écoulement principal au-delà d'une paroi les délimitant (19, 20).

5. Dispositif selon la revendication 4, caractérisé en ce que les parois (18, 19, 20) sont reliées entre elles le long de leurs points de contact (21).

6. Dispositif selon l'une des revendications 1—5, caractérisé en ce que les parois (1, 2, 3, 4) présentent des zones de perméabilité variables.

7. Dispositif selon la revendication 6, caractérisé en ce que sont prévues des zones de parois (6, 8) ayant une perméabilité moindre, de façon contiguë aux moyens d'écartement (5) ou aux points de contact (21) des voussures et/ou en ce que les moyens d'écartement (5) forment eux-mêmes des zones de perméabilité moindre.

8. Dispositif selon l'une des revendications 1—7, caractérisé en ce que les parois (1, 2, 3, 4; 18, 19, 20) sont constituées par un matériau souple et sont maintenues en place sur leurs extrémités et tendues le cas échéant.

9. Dispositif selon la revendication 8, caractérisé en ce que la fixation supérieure et/ou inférieure des parois forme respectivement une unité fermée en elle-même qui peut être entraînée par un mouvement mécanique de va-et-vient à l'intérieur de l'appareil.

10. Dispositif selon la revendication 9, caractérisé en ce que les fixations supérieure et inférieure des parois sont reliées entre elles pour former une unité indépendante qui peut être entraînée globalement par un mouvement mécanique de va-et-vient à l'intérieur de l'appareil.

11. Dispositif selon la revendication 9 ou 10 caractérisé en ce que les parois (1, 2, 3, 4) sont constituées par un tissu textile.

12. Dispositif selon la revendication 11, caractérisé en ce que les zones de perméabilité plus faible sont constituées par des sections de tissu à mailles étroites (6, 8) qui sont posées sur le tissu à mailles plus grandes des parois (1, 2, 3, 4).

13. Dispositif selon l'une des revendications 3—12, caractérisé en ce que les parois perméables sont constituées par un matériau catalytique ou sont revêtues d'un enduit ayant un effet catalytique.

14. Dispositif selon l'une des revendications 3—13, caractérisé en ce que les feuilles continues (24, 25; 30, 31) de ces parois perméables sont enroulées en spirale.

15. Dispositif selon l'une des revendications 1—14, caractérisé en ce que les espacements entre les parois perméables (2, 3) se situent entre 3 et 25 mm, et les espacements verticaux entre deux moyens d'espacement dirigés en opposition l'un de l'autre (5) sur une paroi se situent entre 20 et 100 mm.

## Claims

1. Device for the arrangement in apparatuses for the exchange of material and/or heat and/or for chemical reactions and/or for the mixing of or between gaseous and/or liquid substances comprising at least partly permeable walls (1, 2, 3, 4) which essentially run in the direction of the main flow of the substances through the apparatus whereby between each two adjacent walls (2, 3) continuous chambers are formed at right angles to the direction of the main flow, the said chambers being in mutual flow communication, characterised in that the chambers in the direction of the main flow are bordered by spacing means (5, 6, 7, 9, 10) having a lesser permeability than the areas of the walls (1, 2, 3, 4) to be found between two spacing means (5, 6, 7, 9, 10) and that the spacing means (5, 6, 7, 9, 10) are arranged alternately on opposite sides of the walls (1, 2, 3, 4) so that every chamber bordered by two adjacent walls (2, 3) and running at right angles to the direction of the main flow, with the exception of the outer and end chambers, borders on two consecutive chambers in the direction of the main flow beyond a wall (2, 3) bordering the said chamber.

2. Device according to claim 1, characterised in that the walls (1, 2, 3, 4) are connected to each other by the spacing means (5, 6, 7, 9, 10).

3. Device according to claims 1 or 2, characterised in that the spacing means consist of spacing ribbons (5) essentially arranged at right angles to the walls (1, 2, 3, 4).

4. Device for the arrangement in apparatuses for the exchange of material and/or heat and/or chemical reactions and/or for the mixing of or between gaseous and/or liquid substances comprising at least partly permeable walls (18, 19, 20) which essentially run in the direction of the main flow of the substances through the apparatus whereby between each two adjacent walls (19, 20) continuous chambers are arranged at right angles to the direction of the main flow, the said chambers being in mutual flow communication, characterised in that the chambers in the direction of the main flow are defined by interconnecting bulges (21) of two adjacent walls (18, 19) and in that the bulges (21) are formed alternately towards opposite sides from the walls (18, 19, 20) so that every chamber bordered by two adjacent walls (2, 3) and running at right angles to the direction of the main flow, with the exception of the outer and end chambers, borders on two consecutive chambers in the direction of the main flow beyond a wall (2, 3) bordering the said chamber.

5. Device according to claim 4, characterised in that the walls (18, 19, 20) are connected to each other along their points of contact (21).

6. Device according to any one of the claims 1—5, characterised in that the walls (1, 2, 3, 4) have areas of varying permeability.

7. Device according to claim 6, characterised in that bordering on the spacing means (5) or points of contact (21) wall areas (6, 8) are provided which have lesser permeability and/or that the spacing means (5) themselves form areas of lesser permeability.

8. Device according to any one of the claims 1—7, characterised in that the walls (1, 2, 3, 4; 18, 19, 20) consist of a flexible material and are supported at their ends and, if necessary, are put under tension.

9. Device according to claim 8, characterised in that the upper and/or lower supports of the walls form a closed unit within themselves which can be driven to provide a mechanical back and forth movement within the apparatus.

10. Device according to claim 9, characterised in that the upper and lower supports of the walls are connected to form an integral unit which can be driven to provide a mechanical back and forth movement within the apparatus.

11. Device according to claims 9 or 10, characterised in that the walls (1, 2, 3, 4) consist of a textile fabric.

12. Device according to claim 11, characterised in that the areas of lesser permeability consist of tightly meshed sections of fabric (6, 8) which are laid on top of the more coarsely meshed material of the walls (1, 2, 3, 4).

13. Device according to any one of the claims 3—12, characterised in that the permeable walls consist of a catalytic material or are provided with a coating which is catalytically active.

14. Device according to any one of the claims 3—13, characterised in that webs (24, 25; 30, 31) are wound up in a spiral manner from these permeable walls.

15. Device according to any one of the claims 1—14, characterised in that the distances between the permeable walls (2, 3) amount to between 3 and 25 mm and the vertical distances between two opposite spacing means (5) on one wall amount to between 20 and 100 mm.

Fig.1

Fig.2

Fig.3　　Fig.4　　Fig.5　　Fig.6　　Fig.7

F i g.8

# Fig.9

F i g.10